(19) **Europäisches Patentamt / European Patent Office / Office européen des brevets**

(11) **EP 4 667 311 A1**

(12) **EUROPEAN PATENT APPLICATION**
published in accordance with Art. 153(4) EPC

(43) Date of publication:
**24.12.2025 Bulletin 2025/52**

(21) Application number: **23928657.8**

(22) Date of filing: **23.03.2023**

(51) International Patent Classification (IPC):
**B60W 30/10** (2006.01)  **B25J 5/00** (2006.01)
**B60W 40/04** (2006.01)  **B60W 60/00** (2020.01)
**G01C 21/26** (2006.01)  **G01C 21/34** (2006.01)
**G05D 1/20** (2024.01)

(52) Cooperative Patent Classification (CPC):
**B25J 5/00; B60W 30/10; B60W 40/04;
B60W 60/00; G01C 21/26; G01C 21/34;
G08G 1/005**

(86) International application number:
**PCT/JP2023/011382**

(87) International publication number:
**WO 2024/195078 (26.09.2024 Gazette 2024/39)**

(84) Designated Contracting States:
**AL AT BE BG CH CY CZ DE DK EE ES FI FR GB
GR HR HU IE IS IT LI LT LU MC ME MK MT NL
NO PL PT RO RS SE SI SK SM TR**
Designated Extension States:
**BA**
Designated Validation States:
**KH MA MD TN**

(71) Applicant: **HONDA MOTOR CO., LTD.**
**Tokyo 105-8404 (JP)**

(72) Inventors:
• **MATSUZAKI Sango**
  **Wako-shi, Saitama 351-0193 (JP)**
• **KOMURO Misa**
  **Wako-shi, Saitama 351-0193 (JP)**

(74) Representative: **Kiwit, Benedikt
Mitscherlich PartmbB
Patent- und Rechtsanwälte
Karlstraße 7
80333 München (DE)**

(54) **CONTROL DEVICE, CONTROL METHOD, AND PROGRAM**

(57)    A control device controls mobile-object autonomously moving in region in which another pedestrian is walking while at least temporary guiding person-to-be-guided, and the control device includes recognition-part that recognizes objects including person-to-be-guided and other pedestrian, a prediction part that predicts future-position of the recognized other pedestrian, route-generation-part that generates route along which the mobile-object needs to advance in the future, and driving-controller that controls driving-device attached to the mobile-object so that the mobile-object moves along the route, where in the route-generation-part sets a plurality of route candidates, calculates, for each of the route candidates, first-score based on positional relationship between the mobile-object and previously given destination point and second-score based on positional relationship between the person-to-be-guided and the other pedestrian from the present to future time point, and selects one of the route candidates based on the first-score and the second-score as the route.

FIG. 2

**Description**

TECHNICAL FIELD

The present invention relates to a control device, a control method, and a program.

BACKGROUND ART

In recent years, mobile objects (called robots, micromobility, and the like) that move autonomously following a user for the purpose of transporting luggage of the user, or the like have been put to practical use. An invention of a traveling control device related to micromobility has been disclosed (Patent Document 1). In addition, research is being conducted on mobile objects that not only follow a user but also move autonomously while guiding the user.

Citation List

Patent Document

Patent Document 1: Japanese Unexamined Patent Application, First Publication No. 2023-34583

Non Patent Document

Non Patent Document 1: "Social Force Model for Pedestrian Dynamics" D. Helbing and P. Molnar, 20 May 1998.
Non Patent Document 2: "Human Trajectory Forecasting in Crowds:A Deep Learning Perspective," Parth Kothari, Sven Kreiss, and Alexandre Alahi, 11 January 2021

SUMMARY OF INVENTION

Technical Problem

In conventional technology, depending on a situation in which a mobile object is placed, it may not be possible to generate an appropriate route in some cases. For example, no consideration has been given to what behavior needs to be used to guide a person to be guided.

The present invention has been made in consideration of such circumstances, and one of its objectives is to provide a control device, control method, and program that are capable of generating a route of a mobile object so as to perform appropriate behavior for the person to be guided.

Solution to Problem

A control device, a control method, and a program according to the present invention have adopted the following configuration.

(1): A control device according to one aspect of the present invention is a control device that controls a mobile object autonomously moving in a region in which another pedestrian is walking while at least temporary guiding a person to be guided, and the control device includes a recognition part configured to recognize objects including the person to be guided and the other pedestrian, a prediction part configured to predict a future position of the recognized other pedestrian, a route generation part configured to generate a route along which the mobile object needs to advance in the future, and a driving controller configured to control a driving device attached to the mobile object so that the mobile object moves along the route, wherein the route generation part sets a plurality of route candidates, calculates, for each of the route candidates, a first score based on a positional relationship between the mobile object and a previously given destination point and a second score based on a positional relationship between the person to be guided and the other pedestrian from the present to a future time point, and selects one of the route candidates on the basis of the first score and the second score as the route.

(2): In the aspect of (1) described above, the first score may be a positive value as the mobile object and a previously given destination point are closer to each other, and the second score may be a positive value as an interval between the person to be guided and the other pedestrian is maintained.

(3): In the aspect of (1) described above, the future time point may be a time point when the mobile object reaches each end of the plurality of route candidates.

(4): In the aspect of (1) described above, the route generation part may select one of the route candidates on the basis of an overall score obtained by multiplying each of the first score and the second score by a weight value.

(5): In the aspect of (4) described above, the route generation part may be capable of generating a route that does not take into account a positional relationship between the person to be guided and the other pedestrian by setting the weight value, by which the second score is multiplied, to zero.

(6): In the aspect of (4) described above, the route generation part may change the weight value on the basis of an index value that represents an influence degree that the other pedestrians influences the person to be guided.

(7): In the aspect of (4) described above, the route generation part may change the weight value on the basis of the number of the other pedestrians.

(8): In the aspect of (4) described above, the route generation part may change the weight value on the basis of the distance between the mobile object and the person to be guided.

(9): In the aspect of (4) described above, the route generation part may change the weight value on the basis of a speed of the person to be guided.

(10): In the aspect of (1) described above, the route generation part may further select one of the route candidates on the basis of a degree of deviation between a predicted route for the person to be guided, derived on the basis of route candidates of the mobile object, and an ideal route for the person to be guided, derived on the basis of the route candidates of the mobile object.

(11): In the aspect of (10) described above, the ideal route may be a route along which the person to be guided will move, derived on an assumption that no other pedestrians are present in a vicinity of the mobile object and the person to be guided.

(12): In the aspect of (10) or (11) described above, the predicted route may be a route along which the person to be guided will move, derived by predicting a route along which the other pedestrian will move when the mobile object has moved along a route candidate of the mobile object, and taking into account an influence of the predicted route of the other pedestrian.

(13): A control method according to another aspect of the present invention is a control method executed by a processor of a control device that controls a mobile object autonomously moving in a region in which another pedestrian is walking while at least temporarily guiding a person to be guided, the control method includes recognizing objects including the person to be guided and the other pedestrian, predicting a future position of the recognized other pedestrian, generating a route along which the mobile object needs to advance in the future, and controlling a driving device attached to the mobile object so that the mobile object moves along the route, where in the generation a route includes setting a plurality of route candidates, calculating, for each of the route candidates, a first score based on a positional relationship between the mobile object and a previously given destination point and a second score based on a positional relationship between the person to be guided and the other pedestrian from the present to a future time point, and selecting one of the route candidates on the basis of the first score and the second score as the route.

(14): A program according to still another aspect of the present invention is a program causing a processor of a control device that controls a mobile object autonomously moving in a region in which another pedestrian is walking while at least temporarily guiding a person to be guided to execute recognizing objects including the person to be guided and the other pedestrian, predicting a future position of the recognized other pedestrian, generating a route along which the mobile object needs to advance in the future, and controlling a driving device attached to the mobile object so that the mobile object moves along the route, in which the generation a route includes setting a plurality of route candidates, calculating, for each of the route candidates, a first score based on a positional relationship between the mobile object and a previously given destination point and a second score based on a positional relationship between the person to be guided and the other pedestrian from the present to a future time point, and selecting one of the route candidates on the basis of the first score and the second score as the route.

Advantageous Effects of Invention

According to the aspects (1) to (14), it is possible to generate a route of a mobile object to perform appropriate behavior for a person to be guided.

BRIEF DESCRIPTION OF DRAWINGS

[FIG. 1] A diagram representing a configuration of a mobile object.
[FIG. 2] A diagram representing a configuration of a control device.
[FIG. 3] A diagram representing an example of a route candidate.

**EP 4 667 311 A1**

[FIG. 4] A flowchart representing an example of processing content of a prediction part for a pedestrian.

[FIG. 5] A diagram for describing an example of a method for generating an ideal route.

[FIG. 6] A flowchart representing an example of processing content of a prediction part for a user.

[FIG. 7] A diagram representing an example of characteristics of a third score.

[FIG. 8] A diagram for describing a calculation process of a fourth score.

[FIG. 9] A diagram representing an example of a situation in which a mobile object prevents a user and a pedestrian from approaching each other.

[FIG. 10] A diagram representing an example of a situation in which a mobile object prevents a user and a pedestrian from approaching each other.

[FIG. 11] A flowchart representing an example of a flow of processing executed by a weight value adjustment part.

DESCRIPTION OF EMBODIMENTS

[Outline]

Hereinafter, an embodiment of a control device, a control method, and a program of the present invention will be described with reference to the drawings. The control device of the present invention controls a driving device of a mobile object to move the mobile object. The mobile object in the present invention is an object that moves autonomously in a region in which a pedestrian walks while guiding a person to be guided. The region in which a pedestrian walks is a sidewalk, a public open space, a floor in a building, or the like, and may also include a roadway. In the following description, it is assumed that no person rides on the mobile object, but a person may ride on the mobile object. The person to be guided is, for example, one of pedestrians, but may also be a robot or an animal (hereinafter, this person is referred to as a user U). For example, the mobile object moves a little ahead of a user U who is an elderly person while heading toward a previously given destination point, so that other pedestrians who would be an obstacle to a movement of the user U do not get too close to the user U (that is, it operates to make a way for the user U). The user U is not limited to an elderly person, but may be a person who has difficulty in walking, a child, a person shopping at a supermarket, a patient moving around in a hospital, a pet on walks, or the like. Note that such operations may not be performed constantly, but may be performed temporarily. For example, when the mobile object is traveling alongside a user or follows the user and detects a certain situation (for example, a presence of an obstacle, a traffic congestion, or the like) in a traveling direction of the user, the mobile object may temporarily guide the user by executing an algorithm of the present invention.

[Basic configuration]

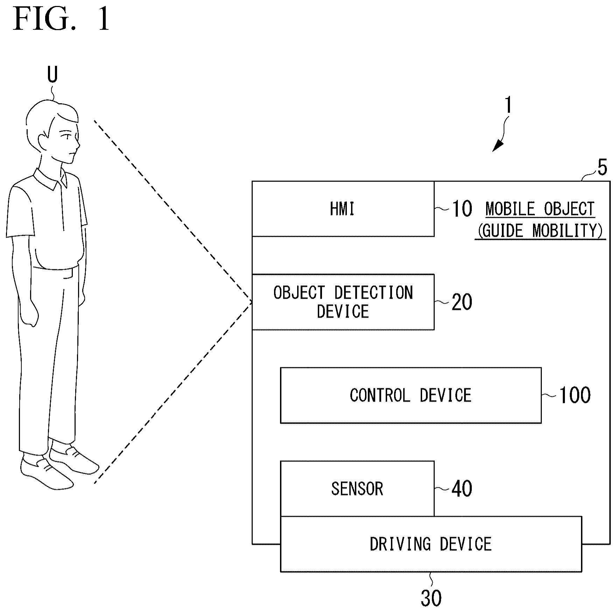

FIG. 1 is a configuration diagram of a mobile object 1. The mobile object 1 is equipped with, for example, a human machine interface (HMI) 10, an object detection device 20, a driving device 30, a sensor 40, and a control device 100. These constituents are supported or housed by a base body 5.

The HMI 10 presents various types of information to the user U and receives an input operation by the user U. The HMI 10 includes various display devices, speakers, buzzers, touch panels, switches, keys, and short-range wireless communication devices. For example, the HMI 10 receives a setting of a destination point.

The object detection device 20 is a device that generates data for recognizing other pedestrians and the user U present in a vicinity of the mobile object 1. The object detection device 20 includes, for example, a camera with a shooting range of the vicinity of the mobile object 1. The object detection device 20 may include sensors such as a radar device, a light detection and ranging (LIDAR), and an ultrasonic sensor, an object recognition device that identifies an object by performing sensor fusion processing based on outputs of these sensors, and the like.

The driving device 30 is a mechanism for moving the mobile object 1, including the base body 5, in any direction. The driving device 30 includes, for example, a plurality of wheels, a drive motor attached to one or more of the wheels, and a steering device attached to one or more of the wheels. There are no particular restrictions on a configuration of the driving device 30, and it may have any configuration. In principle, the driving device 30 moves the mobile object 1 while keeping a front of the base body 5 facing the traveling direction of the mobile object 1.

The sensor 40 is a sensor for detecting a behavior of the mobile object 1. The sensor 40 includes, for example, a wheel speed sensor for detecting a wheel speed, an acceleration sensor for detecting an acceleration acting on the mobile object 1, a yaw rate sensor attached near a horizontal center of gravity of the base body 5, a steering angle sensor for detecting a steering angle of a steering wheel (a steer wheel), and an orientation sensor for detecting a horizontal direction of the mobile object 1.

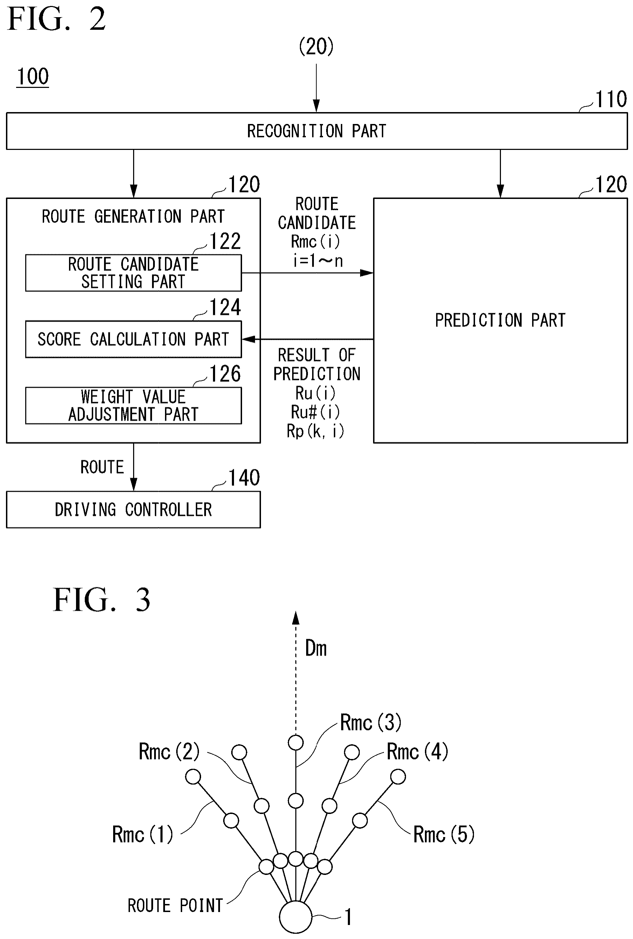

FIG. 2 is a configuration diagram of the control device 100. The control device 100 includes, for example, a recognition part 110, a route generation part 120, a prediction part 130, and a driving controller 140. The route generation part 120 includes a route candidate setting part 122, a score calculation part 124, and a weight value adjustment part 126. These components are realized, for example, by a hardware processor such as a central processing unit (CPU) executing a program (software). Some or all of these components may be realized by hardware (circuit unit; including circuitry) such as a large scale integration (LSI), an application specific integrated circuit (ASIC), a field-programmable gate array (FPGA), or a graphics processing unit (GPU), or may be realized by software and hardware in cooperation. A program may be stored in advance in a storage device (a storage device with a non-transient storage medium) such as a hard disk drive (HDD) or flash memory, or may be stored in a removable storage medium (non-transient storage medium) such as a DVD or CD-ROM, and installed in the storage device by attaching the storage medium to a drive device.

The recognition part 110 recognizes objects, including other pedestrians (hereinafter simply referred to as a pedestrian P) and the user U on the basis of data output by the object detection device 20. When the object detection device 20 is a camera, the recognition part 110 recognizes the pedestrian by inputting a camera image into a trained model for identifying pedestrians. The same applies to objects other than the pedestrians. In addition, to distinguish between the pedestrian P and the user U, the recognition part 110 may store a plurality of images of the user U captured by the camera in advance as templates in a storage unit (not shown), and identify the user U by comparing the templates with the camera images. In addition, the recognition part 110 may recognize a position of the user U by a terminal device held by the user U and the HMI 10 performing short-range wireless communication using communication directivity.

[Route candidates]

The route candidate setting part 122 of the route generation part 120 generates a plurality of route candidates Pmc(i) that are candidates for a route Rm along which the mobile object 1 needs to move in the future. i is an identifier of the route candidates and takes a value from 1 to n (n is a natural number of 2 or more). The route and route candidates are generated as a series of a plurality of (q) route points arranged at a predetermined distance. The route points represent points that the mobile object 1 needs to reach at each predetermined time (each step). FIG. 3 is a diagram which shows an example of route candidates Rmc(i). Here, it is assumed that n=5 and q=3. The route candidate setting part 122 generates route candidates Rmc(1), Rmc(2), Rmc(4), and Rmc(5) that extend to the left and right from, for example, a route candidate Rmc(3) that extends linearly along a forward direction Dm of the mobile object 1. It is assumed that an interval between route points is, for example, constant, and each route candidate has a length of q step. The route candidates are not generated to reach a destination point given to the mobile object 1, but are generated to have a length of a constant distance×q step. For example, the route candidate Rmc(2) is generated to turn left by a predetermined angle at each step. The route candidate Rmc(1) is generated to turn left by a larger predetermined angle at each step. The opposite is applied to route candidates Rmc(4) and Rmc(5). Such a rule is merely an example, and route candidates may be generated on the basis of other rules as long as they show a similar tendency (gradual spread). The route candidate setting part 122 outputs the route candidates Rmc(i) to the prediction part 130.

In the example of FIG. 3, it is assumed that the interval between route points is constant, but the interval may also be variable. A long interval indicates that a vehicle moves at a relatively high speed, and a short interval indicates that a vehicle moves at a relatively low speed therebetween. In other words, the route Rm and the route candidate Rmc(i) may include a speed factor. For example, the route candidate setting part 122 derivatively generates route candidates having fluctuations in speed based on route candidates generated with a constant interval between route points.

[Prediction (simulation)]

When the route candidates Rmc(i) are given, the prediction part 130 predicts future positions of the pedestrian P and the user U for each of the route candidates Rmc(i) on the basis of the route candidates. The prediction part 130 predicts the future positions of the pedestrian P and the user U by, for example, any of the methods described in Non-Patent Documents 1 to 3, or a combination of these methods. In the following example, it is assumed that the prediction part 130 predicts the future positions of the pedestrian P and the user U using a method based on the Social Force Model (SFM) described in Non-Patent Document 1.

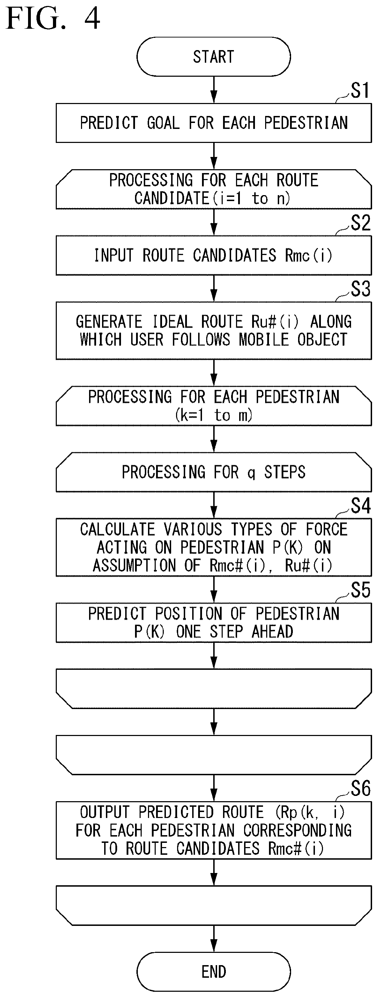

FIG. 4 is a flowchart which shows an example of processing content of the prediction part 130 for the pedestrian P. First, the prediction part 130 predicts a goal for each pedestrian P (S1). For example, the prediction part 130 observes a movement trajectory of the pedestrian P in time series, and predicts a destination of the movement vector of the pedestrian P when there are no other pedestrians P, mobile object 1, or user U in the vicinity as a goal (reach point) of the pedestrian P.

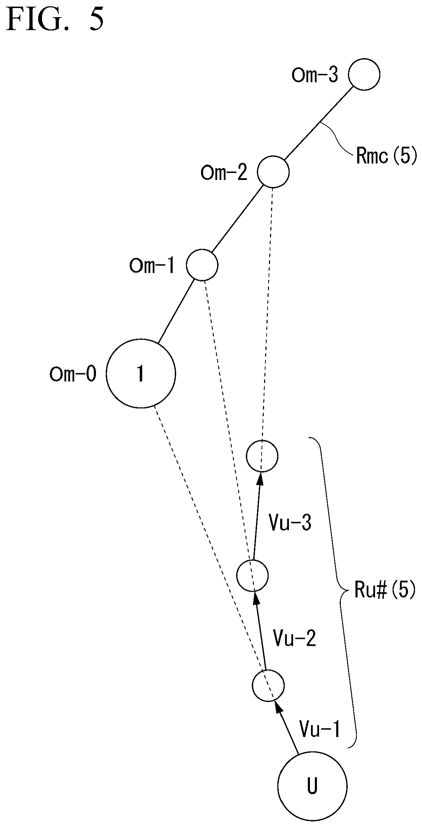

Next, the prediction part 130 performs the processing of S2 to S6 for each of the route candidates Rmc(i). The prediction part 130 sequentially inputs route candidates Rmc(i) of the mobile object 1 one by one (S2), and generates an ideal route Ru#(i) when the user U follows the mobile object 1 by associating it with each of the route candidates Rmc(i) (S3). The ideal route Ru#(i) is a route along which the user U is predicted to move on in an assumption that the pedestrian P is not present in the vicinity of the mobile object 1 and the user U. FIG. 5 is a diagram for describing an example of a method for generating the ideal route Ru#(i). Here, an example is shown in which the ideal route Ru#(5) corresponding to the route candidate Rmc(5) is generated. For example, the prediction part 130 generates the ideal route Ru#(5) for the user U so that a movement vector Vu-1 of the user U moving from step 0 (at a calculation time point) to step 1 heads toward a position Om-0 of the mobile object 1 at step 0, a movement vector Vu-2 of the user U moving from step 1 to step 2 heads toward a position Om-1 of the mobile object 1 at step 1, and a movement vector Vu-3 of the user U moving from step 2 to step 3 heads toward a position Om-2 of the mobile object 1 at step 2, that is, to follow mobile object 1 with a delay of one step. This generation method is merely an example, and other generation methods may also be adopted.

Returning to FIG. 4, the prediction part 130 executes the processing of S4 and S5 for q steps for each pedestrian P (k=1 to m). First, various forces acting on a pedestrian P(k) in the current step are calculated on an assumption that the mobile object 1 and the user U move along the route candidates Rmc(i) of the mobile object 1 and the ideal route Ru#(i) of the user U, respectively (S4). These forces do not actually act, but are virtual forces that are considered to be caused by a psychological movement of the pedestrian P(k).

The virtual forces include, for example, (1) an influence F1 caused by an approach of another object (the mobile object 1 and the user U in this case), (2) a turning force F2 that corrects a direction to head toward a goal after changing a course mainly due to the influence F1, and (3) an acceleration or deceleration force F3 that adjusts a speed to return to a desired speed after the speed is accelerated or decelerated mainly due to the influence F1. F1 is a translational force acting in any direction on a two-dimensional plane, F2 is a rotational force centering about the pedestrian, and F3 is a translational force parallel to a movement vector of the pedestrian. F1 to F3 can be expressed simply as follows. In addition to these, integral elements, differential elements, and the like may be added to calculate the virtual forces.

$$F1 = (\text{weight}) \times (\text{coefficient}) \times (\text{relative speed}) / (\text{distance to other object})$$

F2= (moment of inertia)×(coefficient)×(angle difference between a most recent movement vector and a direction toward a goal) F3 = weight×(coefficient)×(difference between a desired speed and a most recent speed)

The prediction part 130 predicts the position and speed of the pedestrian P(k) one step ahead on an assumption that a virtual force continues to act for one step (S5). By executing such processing for q steps for each pedestrian, a predicted route Rp(k,i) for each pedestrian P(k) is generated and output (S6). This predicted route Rp(k,i) is a result of predicting the future position of each pedestrian P(k) for each of the route candidates Rmc(i).

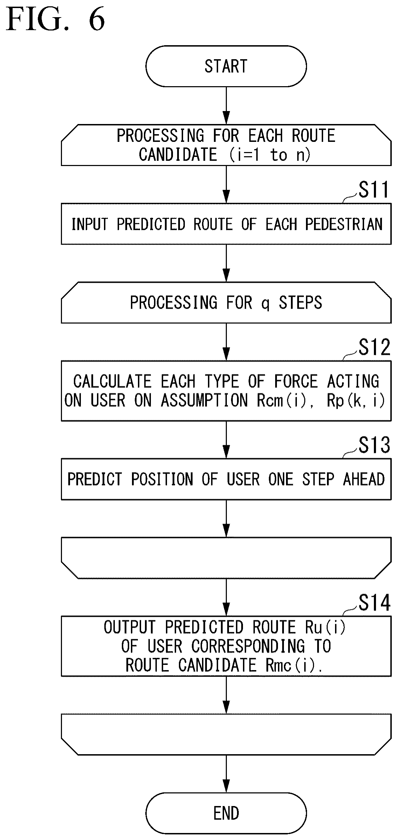

Next, prediction part 130 predicts the future position of the user U according to a flowchart in FIG. 6. FIG. 6 is a flowchart showing an example of the processing content of the prediction part 130 for the user U.

The prediction part 130 performs processing of S11 to S14 for each of the route candidates Rmc(i). The prediction part 130 inputs the predicted route of each pedestrian corresponding to the route candidates Rmc(i) (S11). Next, the prediction part 130 executes the processing of S12 and S13 for q steps. The prediction part 130 calculates various forces acting on the user U in a current step on an assumption that the mobile object 1 and each pedestrian P(k) move according to the route candidates Rmc(i) and the predicted route Rp(k,i) of each pedestrian (S12). A method of calculating these various forces may be the same as the processing of S4 in FIG. 4. The prediction part 130 predicts the position and speed of the user U one step ahead on an assumption that a virtual force continues to act for one step (S13). By executing such processing for q steps, a predicted route Ru(i) of the user U for each of the route candidates Rmc(i) is generated and output (S14). This predicted route Ru(i) is a result of predicting the future position of the user U for each of the route candidates Rmc(i).

[Evaluation of route candidates]

Returning to FIG. 2, when the predicted route Ru(i), the ideal route Ru#(i), and the predicted route Rp(k,i) corresponding to i=1 to n are acquired from the prediction part 130 as a result of prediction, the score calculation part 124 calculates an overall score SC(i) for each of the route candidates Rmc(i). The overall score SC(i) is expressed by Equation (1). α and β are coefficients, SC1(i) is a first score, and SC2(i) is a second score. A smaller value of the overall score SC(i) indicates a better evaluation, and it is assumed that the coefficients α, β, and ζ and η shown below are positive values.

$$SC(i) = \alpha \cdot SC1(i) + \beta \cdot SC2(i)...(1)$$

The first score SC1(i) is a score based on a positional relationship between the mobile object 1 and a destination point given to the mobile object 1. For example, the first score SC1(i) is calculated to be larger as a distance X1 between an end point (a point farthest from the mobile object 1) of the route candidates Rmc(i) and the destination point given to the mobile object 1 becomes longer, and to be smaller as the distance X1 becomes shorter. The first score SC1(i) may be the distance X1 as it is, may be a logarithm or exponent of the distance X1, or may be an output value of some function that uses the distance as an input value.

The second score SC2(i) is a score based on a positional relationship between the user U and the pedestrian P from the present to a future time point (a time point at which an end of the route is reached). The second score SC2(i) becomes a more positive value as the distance between the user U and the pedestrian P is better maintained. For example, the second score SC2(i) is calculated on the basis of Equation (2). SC3(i) is a third score, and SC4(i) is a fourth score.

$$SC2(i) = \zeta \cdot SC3(i) + \eta \cdot SC4(i) \ldots (2)$$

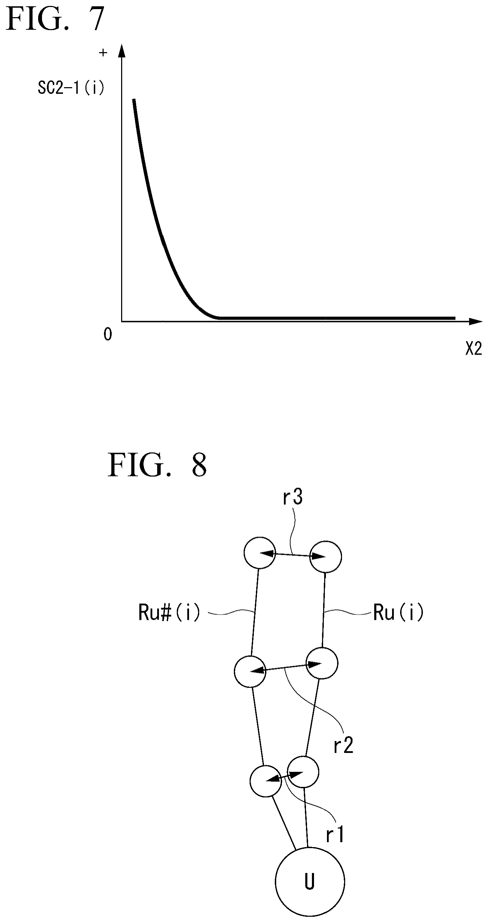

For example, the third score SC3(i) is calculated by calculating a distance between route points of the predicted route Ru(i) of the user U and route points of a predicted route Rp(k,i) of all pedestrians P for each step, and the third score SC3(i) is calculated to become larger as a shortest distance (that is, a distance when the user U and any pedestrian P approach each other the most during q steps) X2 becomes shorter, and to become smaller as the shortest distance becomes longer. However, when the distance X2 is sufficiently long (the interval between the user U and the pedestrian P is sufficiently maintained), the third score SC3(i) may indicate a constant value. For example, when the distance X2 is equal to or greater than a boundary value of about 2 [m], the third score SC3(i) may indicate zero. FIG. 7 is a diagram which shows an example of characteristics of the third score SC3(i). The third score SC3(i) is preferably calculated so that it increases rapidly as the distance X2 decreases to prevent the user U and the pedestrian P from approaching each other. For example, a barrier function, an exponential function, or the like is preferably used, but any function that shows a similar tendency may be used.

The fourth score SC4(i) is calculated so that it increases as a degree of deviation between the predicted route Ru(i) and the ideal route Ru#(i) increases. For example, the score calculation part 124 squares the distance between the route points of the predicted route Ru(i) and the ideal route Ru#(i) for each step, and calculates a square of a sum value as the fourth score SC4(i). FIG. 8 is a diagram for describing a calculation process of the fourth score SC4(i). In FIG. 8, r1 is a distance between route points of a first step of the predicted route Ru(i) and the ideal route Ru#(i), r2 is a distance between route points of a second step of the predicted route Ru(i) and the ideal route Ru#(i), and r3 is a distance between route points of a third step of the predicted route Ru(i) and the ideal route Ru#(i). The fourth score SC4(i) is calculated, for example, as $\sqrt{(r1^2 + r2^2 + r3^2)}$.

After the overall score SC(i) for each of the route candidates Rmc(i) is calculated, the score calculation part 124 selects the route candidate Rmc(i) with a smallest overall score SC(i) and outputs it to the driving controller 140 as a route Rm of the mobile object 1. The driving controller 140 controls the driving device 30 attached to the mobile object 1 so that the mobile object 1 moves along the route Rm.

By performing the processing in this manner, the mobile object 1 is controlled to simultaneously guide (lead) the user U to the given destination point by heading toward the destination point, and to prevent other pedestrians P from getting too close to the user U by its own presence. For example, in a situation in which the pedestrian P is approaching the user U, the overall score of route candidates Rmc(i) in which the mobile object 1 is between the pedestrian P and the user U and prevents an approach of the pedestrian P would become relatively high.

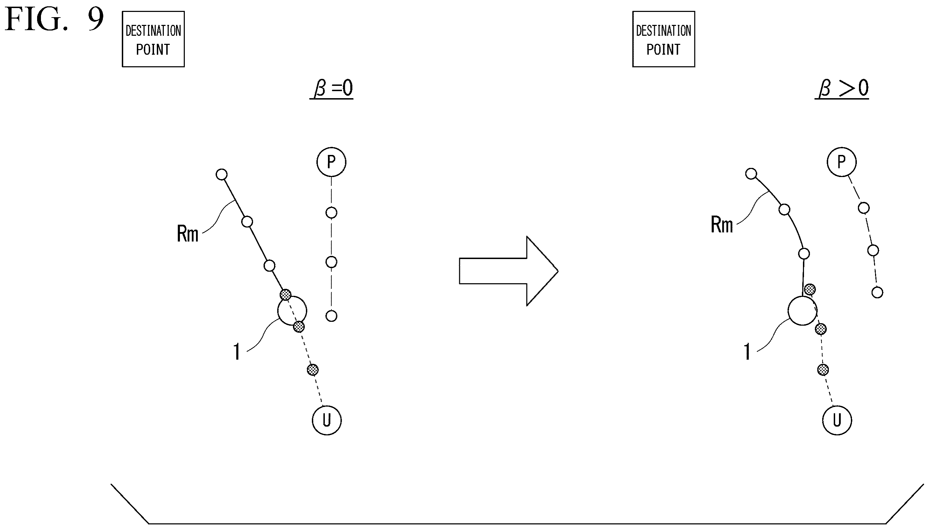

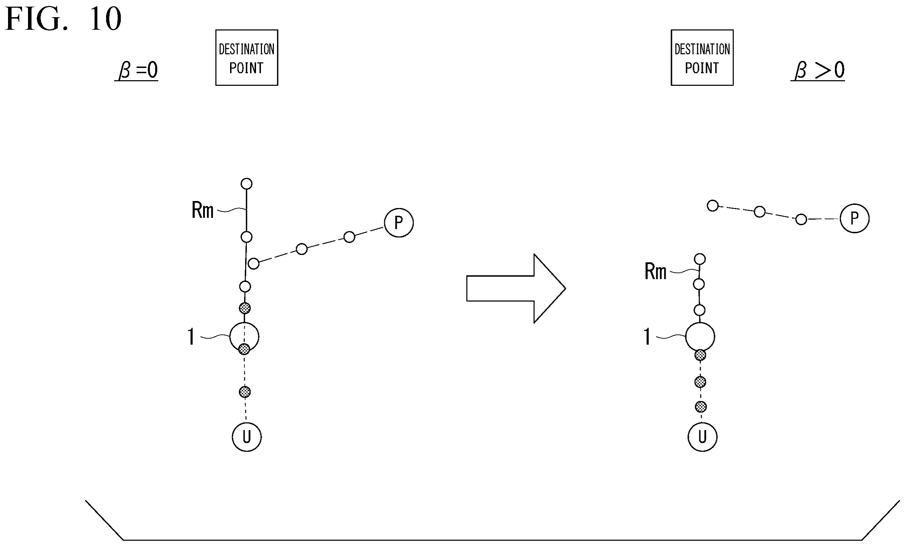

FIGS. 9 and 10 are diagrams that show an example of a situation in which the mobile object 1 prevents the user U and the pedestrian P from approaching each other. In FIGS. 9 and 10, a left diagram shows a movement route of the pedestrian P when the route Rm is selected with a coefficient β=0, which takes into consideration only moving toward a destination point, and a right diagram shows a movement route of the pedestrian P when the coefficient β is sufficiently greater than 0. In the example on the right diagram of FIG. 9, the mobile object 1 takes the route Rm that bulges to the right, which causes the pedestrian P to take a route that leans leftward (due to the influence F1), thereby preventing the pedestrian P from approaching the user U. In the example on the right diagram of FIG. 10, the mobile object 1 deliberately moves at a low speed, which causes the pedestrian P to take a route that leans rightward (due to the influence F1), thereby preventing the pedestrian P from approaching the user U. In this manner, the control device 100 can generate a route of the mobile object 1 to behave appropriately for the user U.

[Weight (coefficient) adjustment]

Each of the coefficients α, β, ζ, and η may be a fixed value, or may be adjusted by the weight value adjustment part 126. The weight value adjustment part 126 changes a movement tendency of the mobile object 1, for example, by fixing α and varying each of β, ζ, and η. By increasing the coefficients β and ζ, the mobile object 1 will take a behavior that prioritizes preventing the approach of the pedestrian P to the user U, but on the other hand, a reach to the destination point is likely to be delayed. Therefore, by adjusting the coefficients according to a situation of the mobile object 1 and the user U, a more appropriate route can be generated. Note that the weight value adjustment part 126 may realize an operating mode in which the coefficient β is set to zero or an operating mode in which the coefficient η is set to zero according to an input to the HMI 10.

For example, the weight value adjustment part 126 may adjust the coefficient β on the basis of an index value indicating a degree of influence that the pedestrian P has on the user U, for example, the influence F1 described above. More specifically, when a plurality of pedestrians P are recognized, the weight value adjustment part 126 may extract the maximum influence F1 among these pedestrians P, and adjust the coefficient β so that the coefficient β increases as the maximum influence F1 increases. Similar processing may also be performed on the basis of a sum of the influences F1 of the plurality of pedestrians P.

Furthermore, the weight value adjustment part 126 may adjust the coefficient β on the basis of the number m of pedestrians P. More specifically, the weight value adjustment part 126 may adjust the coefficient β so that the coefficient β increases as the number m of pedestrians P increases.

Furthermore, the weight value adjustment part 126 may adjust the coefficient β on the basis of both the influence F1 and the number m of pedestrians P. More specifically, the weight value adjustment part 126 may perform the same processing as described above on the basis of a value obtained by multiplying a maximum or a sum value of the influence F1 by the number m of pedestrians P.

Moreover, the weight value adjustment part 126 may adjust the coefficient β on the basis of a distance between the mobile object 1 and the user U. More specifically, the weight value adjustment part 126 may adjust the coefficient β so that the coefficient β becomes larger as the distance between the mobile object 1 and the user U becomes longer. A long distance between the mobile object 1 and the user U indicates that the user U is delayed in following the mobile object 1 for some reasons, and therefore it is inferred that the mobile object 1 needs to be brought closer to the user U to prevent an approach of the pedestrian P.

Moreover, the weight value adjustment part 126 may adjust the coefficient β on the basis of a speed of the user U. More specifically, the weight value adjustment part 126 may adjust the coefficient β so that the coefficient β becomes larger as the speed of the user U becomes slower. A slow speed of the user U indicates that the user U is delayed in following the mobile object 1 for some reasons, and therefore it is inferred that the mobile object 1 needs to be brought closer to the user U to prevent the approach of the pedestrian P.

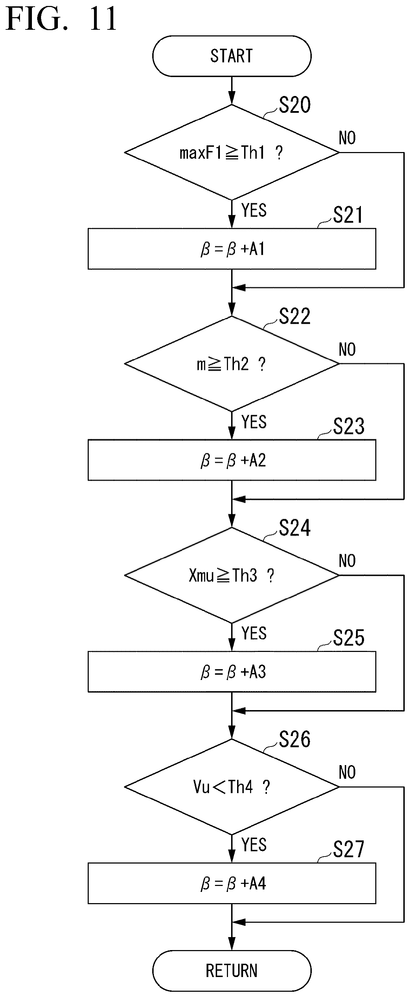

FIG. 11 is a flowchart which shows an example of a flow of processing executed by the weight value adjustment part 126 when all of the elements described above are reflected. First, the weight value adjustment part 126 determines whether a maximum value maxF1 of the influence F1 is equal to or greater than a threshold value Th1 (S20). When the maximum value maxF1 of the influence F1 is equal to or greater than the threshold value Th1, the weight value adjustment part 126 increases the coefficient β by a first predetermined value A1 (S21).

Next, the weight value adjustment part 126 determines whether the number m of pedestrians P is equal to or greater than a threshold value Th2 (S22). When the number m of pedestrians P is equal to or greater than the threshold value Th2, the weight value adjustment part 126 increases the coefficient β by a second predetermined value A2 (S23).

Next, the weight value adjustment part 126 determines whether a distance Xmu between the mobile object 1 and the user U is equal to or greater than a threshold value Th3 (S24). When the distance Xmu is equal to or greater than the threshold value Th3, the weight value adjustment part 126 increases the coefficient β by a third predetermined value A3 (S25).

Next, the weight value adjustment part 126 determines whether a speed Vu of the user U is less than a threshold value Th4 (S26). When the speed Vu is less than the threshold value Th4, the weight value adjustment part 126 increases the coefficient β by a fourth predetermined value A4 (S27).

According to the embodiment described above, it is possible to generate a route of the mobile object 1 to perform an appropriate behavior for a person to be guided (the user U).

In the description above, it is assumed that the control device 100 is mounted on the mobile object 1, but the present invention is not limited thereto. The control device 100 may be installed at a place away from the mobile object 1, acquire output data from the object detection device 20 via communication, and may transmit a driving instruction signal to the driving device 30, that is, may remotely control the mobile object 1.

The embodiment described above can be expressed as follows.

A control device controls a mobile object autonomously moving in a region in which another pedestrian is walking while at least temporary guiding a person to be guided, and includes one or more storage media configured to store computer-readable instructions, and a processor connected to the one or more storage media, wherein the processor executes the computer-readable instructions to perform recognizing objects including the person to be guided and the other pedestrian, predicting a future position of the recognized other pedestrian, generating a route along which the mobile object needs to advance in the future, and controlling a driving device attached to the mobile object so that the mobile object moves along the route, and the generating a route includes setting a plurality of route candidates, calculating, for each of the route candidates, a first score based on a positional relationship between the mobile object and a previously given destination point and a second score based on a positional relationship between the person to be guided and the other pedestrian from the present to a future time point, and selecting one of the route candidates on the basis of the first score and the second score as the route.

The above describes a form for carrying out the present invention using an embodiment, but the present invention is not limited to such an embodiment, and various modifications and substitutions can be made within a range that does not deviate from the scope of the present invention.

REFERENCE SIGNS LIST

1 Mobile object
20 Object detection device
30 Driving device
100 Control device
110 Recognition part
120 Route generation part
122 Route candidate setting part
124 Score calculation part
126 Weight value adjustment part
130 Prediction part
140 Driving controller

**Claims**

1. A control device that controls a mobile object autonomously moving in a region in which another pedestrian is walking while at least temporary guiding a person to be guided, the control device comprising:

   a recognition part configured to recognize objects including the person to be guided and the other pedestrian;
   a prediction part configured to predict a future position of the recognized other pedestrian;
   a route generation part configured to generate a route along which the mobile object needs to advance in the future; and
   a driving controller configured to control a driving device attached to the mobile object so that the mobile object moves along the route,
   wherein the route generation part sets a plurality of route candidates, calculates, for each of the route candidates, a first score based on a positional relationship between the mobile object and a previously given destination point and a second score based on a positional relationship between the person to be guided and the other pedestrian from the present to a future time point, and selects one of the route candidates on the basis of the first score and the second score as the route.

2. The control device according to claim 1,

   wherein the first score is a more positive value as the mobile object and a previously given destination point become closer to each other, and
   the second score is a more positive value as an interval between the person to be guided and the other pedestrian is better maintained.

3. The control device according to claim 1,
   wherein the future time point is a time point when the mobile object reaches each end of the plurality of route candidates.

4. The control device according to claim 1,
   wherein the route generation part selects one of the route candidates on the basis of an overall score obtained by multiplying each of the first score and the second score by a weight value.

5. The control device according to claim 4,
   wherein the route generation part is capable of generating a route that does not take into account a positional relationship between the person to be guided and the other pedestrian by setting the weight value, by which the second score is multiplied, to zero.

6. The control device according to claim 4,

wherein the route generation part changes the weight value on the basis of an index value that represents an influence degree that the other pedestrians influences the person to be guided.

7. The control device according to claim 4,
   wherein the route generation part changes the weight value on the basis of the number of the other pedestrians.

8. The control device according to claim 4,
   wherein the route generation part changes the weight value on the basis of the distance between the mobile object and the person to be guided.

9. The control device according to claim 4,
   wherein the route generation part changes the weight value on the basis of a speed of the person to be guided.

10. The control device according to claim 1,
    wherein the route generation part further selects one of the route candidates on the basis of a degree of deviation between a predicted route for the person to be guided, derived on the basis of route candidates of the mobile object, and an ideal route for the person to be guided, derived on the basis of the route candidates of the mobile object.

11. The control device according to claim 10,
    wherein the ideal route is a route along which the person to be guided will move, derived on an assumption that no other pedestrians are present in a vicinity of the mobile object and the person to be guided.

12. The control device according to claim 10 or 11,
    wherein the predicted route is a route along which the person to be guided will move, derived by predicting a route along which the other pedestrian will move when the mobile object has moved along a route candidate of the mobile object, and taking into account an influence of the predicted route of the other pedestrian.

13. A control method executed by a processor of a control device that controls a mobile object autonomously moving in a region in which another pedestrian is walking while at least temporarily guiding a person to be guided, the method comprising:

    recognizing objects including the person to be guided and the other pedestrian;
    predicting a future position of the recognized other pedestrian;
    generating a route along which the mobile object needs to advance in the future; and
    controlling a driving device attached to the mobile object so that the mobile object moves along the route,
    wherein the generation a route includes setting a plurality of route candidates, calculating, for each of the route candidates, a first score based on a positional relationship between the mobile object and a previously given destination point and a second score based on a positional relationship between the person to be guided and the other pedestrian from the present to a future time point, and selecting one of the route candidates on the basis of the first score and the second score as the route.

14. A program causing a processor of a control device that controls a mobile object autonomously moving in a region in which another pedestrian is walking while at least temporarily guiding a person to be guided to execute:

    recognizing objects including the person to be guided and the other pedestrian,
    predicting a future position of the recognized other pedestrian,
    generating a route along which the mobile object needs to advance in the future, and
    controlling a driving device attached to the mobile object so that the mobile object moves along the route,
    wherein the generation a route includes setting a plurality of route candidates, calculating, for each of the route candidates, a first score based on a positional relationship between the mobile object and a previously given destination point and a second score based on a positional relationship between the person to be guided and the other pedestrian from the present to a future time point, and selecting one of the route candidates on the basis of the first score and the second score as the route.

# FIG. 1

U

1

5

| | |
|---|---|
| HMI | ~10 MOBILE OBJECT (GUIDE MOBILITY) |
| OBJECT DETECTION DEVICE | ~20 |

CONTROL DEVICE ~100

SENSOR ~40

DRIVING DEVICE

30

# FIG. 2

<u>100</u>

(20)

```
                          ↓
┌──────────────────────────────────────────────────────────────┐ ⌐110
│                    RECOGNITION PART                            │
└──────────────────────────────────────────────────────────────┘
     │                                              │
     ↓                                              ↓
┌─────────────────────────────┐ ⌐120        ┌──────────────────┐ ⌐120
│   ROUTE GENERATION PART      │   ROUTE     │                  │
│                     ⌐122     │  CANDIDATE  │                  │
│  ┌─────────────────────────┐ │   Rmc(i)    │                  │
│  │  ROUTE CANDIDATE        │ │   i=1~n     │                  │
│  │  SETTING PART           │─┼────────────→│                  │
│  └─────────────────────────┘ │             │                  │
│                     ⌐124     │             │  PREDICTION PART │
│  ┌─────────────────────────┐ │             │                  │
│  │  SCORE CALCULATION PART │←┼─────────────│                  │
│  └─────────────────────────┘ │  RESULT OF  │                  │
│                     ⌐126     │ PREDICTION  │                  │
│  ┌─────────────────────────┐ │   Ru(i)     │                  │
│  │  WEIGHT VALUE           │ │   Ru#(i)    │                  │
│  │  ADJUSTMENT PART        │ │   Rp(k,i)   │                  │
│  └─────────────────────────┘ │             │                  │
└─────────────────────────────┘             └──────────────────┘
     │  ROUTE
     ↓              ⌐140
┌─────────────────────────────┐
│     DRIVING CONTROLLER       │
└─────────────────────────────┘
```

# FIG. 3

# FIG. 4

```
                    ( START )
                        │
                        ▼              ⟋S1
        ┌───────────────────────────────────┐
        │  PREDICT GOAL FOR EACH PEDESTRIAN  │
        └───────────────────────────────────┘
                        │
                        ▼
       ╱────────────────────────────────────╲
       │      PROCESSING FOR EACH ROUTE       │
       │        CANDIDATE(i=1 to n)           │
       └──────────────────────────────────────┘
                        │              ⟋S2
        ┌───────────────────────────────────┐
        │     INPUT ROUTE CANDIDATES Rmc(i)   │
        └───────────────────────────────────┘
                        │              ⟋S3
        ┌───────────────────────────────────┐
        │  GENERATE IDEAL ROUTE Ru#(i) ALONG  │
        │  WHICH USER FOLLOWS MOBILE OBJECT   │
        └───────────────────────────────────┘
                        │
                        ▼
       ╱────────────────────────────────────╲
       │     PROCESSING FOR EACH PEDESTRIAN   │
       │            (k=1 to m)                │
       └──────────────────────────────────────┘
                        │
                        ▼
       ╱────────────────────────────────────╲
       │         PROCESSING FOR q STEPS       │
       └──────────────────────────────────────┘
                        │              ⟋S4
        ┌───────────────────────────────────┐
        │  CALCULATE VARIOUS TYPES OF FORCE   │
        │   ACTING ON PEDESTRIAN P(K) ON      │
        │   ASSUMPTION OF Rmc#(i), Ru#(i)     │
        └───────────────────────────────────┘
                        │              ⟋S5
        ┌───────────────────────────────────┐
        │    PREDICT POSITION OF PEDESTRIAN   │
        │        P(K) ONE STEP AHEAD          │
        └───────────────────────────────────┘
                        │
                        ▼
       ╱────────────────────────────────────╲
       └──────────────────────────────────────┘
                        │
                        ▼
       ╱────────────────────────────────────╲
       └──────────────────────────────────────┘
                        │              ⟋S6
        ┌───────────────────────────────────┐
        │   OUTPUT PREDICTED ROUTE (Rp(k, i)  │
        │  FOR EACH PEDESTRIAN CORRESPONDING  │
        │     TO ROUTE CANDIDATES Rmc#(i)     │
        └───────────────────────────────────┘
                        │
                        ▼
       ╱────────────────────────────────────╲
       └──────────────────────────────────────┘
                        │
                        ▼
                    (  END  )
```

FIG. 5

# FIG. 6

```
            ┌─────────────┐
            │    START    │
            └─────────────┘
                   │
                   ▼
    ╱───────────────────────────────╲
    │  PROCESSING FOR EACH ROUTE     │
    │  CANDIDATE (i=1 to n)          │
    └───────────────────────────────┘
                   │            ⟋S11
                   ▼
    ┌───────────────────────────────┐
    │ INPUT PREDICTED ROUTE OF EACH PEDESTRIAN │
    └───────────────────────────────┘
                   │
                   ▼
    ╱───────────────────────────────╲
    │     PROCESSING FOR q STEPS     │
    └───────────────────────────────┘
                   │            ⟋S12
                   ▼
    ┌───────────────────────────────┐
    │ CALCULATE EACH TYPE OF FORCE ACTING │
    │ ON USER ON ASSUMPTION Rcm(i), Rp(k,i) │
    └───────────────────────────────┘
                   │            ⟋S13
                   ▼
    ┌───────────────────────────────┐
    │ PREDICT POSITION OF USER ONE STEP AHEAD │
    └───────────────────────────────┘
                   │
                   ▼
    ╲───────────────────────────────╱

                   │            ⟋S14
                   ▼
    ┌───────────────────────────────┐
    │ OUTPUT PREDICTED ROUTE Ru(i)   │
    │ OF USER CORRESPONDING TO       │
    │ ROUTE CANDIDATE Rmc(i).        │
    └───────────────────────────────┘
                   │
                   ▼
    ╲───────────────────────────────╱

                   │
                   ▼
            ┌─────────────┐
            │     END     │
            └─────────────┘
```

# FIG. 7

# FIG. 8

FIG. 9

EP 4 667 311 A1

# FIG. 10

β =0

DESTINATION POINT

DESTINATION POINT

β >0

Rm

P

1

U

Rm

1

P

U

# FIG. 11

```
        START
          │
          ▼
         ╱S20╲
        ╱      ╲      NO
       ╱maxF1≧Th1?╲──────┐
        ╲      ╱          │
         ╲    ╱           │
          │YES            │
          ▼  S21          │
    ┌──────────────┐      │
    │  β = β +A1   │      │
    └──────────────┘      │
          │◄──────────────┘
          ▼
         ╱S22╲
        ╱      ╲      NO
       ╱ m≧Th2? ╲──────┐
        ╲      ╱        │
         ╲    ╱         │
          │YES          │
          ▼  S23        │
    ┌──────────────┐    │
    │  β = β +A2   │    │
    └──────────────┘    │
          │◄────────────┘
          ▼
         ╱S24╲
        ╱      ╲      NO
       ╱Xmu≧Th3?╲──────┐
        ╲      ╱        │
         ╲    ╱         │
          │YES          │
          ▼  S25        │
    ┌──────────────┐    │
    │  β = β +A3   │    │
    └──────────────┘    │
          │◄────────────┘
          ▼
         ╱S26╲
        ╱      ╲      NO
       ╱ Vu<Th4? ╲──────┐
        ╲      ╱        │
         ╲    ╱         │
          │YES          │
          ▼  S27        │
    ┌──────────────┐    │
    │  β = β +A4   │    │
    └──────────────┘    │
          │◄────────────┘
          ▼
        RETURN
```

## INTERNATIONAL SEARCH REPORT

| International application No. |
| --- |
| **PCT/JP2023/011382** |

### A. CLASSIFICATION OF SUBJECT MATTER

***B60W 30/10***(2006.01)i; ***B25J 5/00***(2006.01)i; ***B60W 40/04***(2006.01)i; ***B60W 60/00***(2020.01)i; ***G01C 21/26***(2006.01)i;
***G01C 21/34***(2006.01)i; ***G05D 1/02***(2020.01)i; ***G08G 1/005***(2006.01)i
FI: B60W30/10; B25J5/00 E; B60W40/04; B60W60/00; G01C21/26 P; G01C21/34; G05D1/02 H; G08G1/005

According to International Patent Classification (IPC) or to both national classification and IPC

### B. FIELDS SEARCHED

Minimum documentation searched (classification system followed by classification symbols)

B60W30/00-60/00; B25J5/00; G01C21/26-21/36; G05D1/00-1/02; G08G1/00-1/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2022-17770 A (HONDA MOTOR CO., LTD.) 26 January 2022 (2022-01-26) paragraphs [0022]-[0044], fig. 3-6 | 1-3, 13-14 |
| A | | 4-12 |
| A | JP 2011-59905 A (HIROSHIMA UNIVERSITY) 24 March 2011 (2011-03-24) entire text | 1-14 |
| A | JP 2022-60801 A (UNIVERISTY OF WASEDA) 15 April 2022 (2022-04-15) entire text | 1-14 |
| A | JP 2017-146945 A (UNIV SAITAMA) 24 August 2017 (2017-08-24) entire text | 1-14 |

☐ Further documents are listed in the continuation of Box C.  ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **06 June 2023** | **13 June 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/011382**

| Patent document cited in search report | | | Publication date (day/month/year) | Patent family member(s) | Publication date (day/month/year) |
|---|---|---|---|---|---|
| JP | 2022-17770 | A | 26 January 2022 | US 2022/0019228 A1 paragraphs [0031]-[0053], fig. 3-6 CN 114003027 A | |
| JP | 2011-59905 | A | 24 March 2011 | (Family: none) | |
| JP | 2022-60801 | A | 15 April 2022 | (Family: none) | |
| JP | 2017-146945 | A | 24 August 2017 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023034583 A

**Non-patent literature cited in the description**

- **D. HELBING** ; **P. MOLNAR**. *Social Force Model for Pedestrian Dynamics*, 20 May 1998

- **PARTH KOTHARI** ; **SVEN KREISS** ; **ALEXANDRE ALAHI**. *Human Trajectory Forecasting in Crowds:A Deep Learning Perspective*, 11 January 2021